# EUROPÄISCHE PATENTSCHRIFT

(11) **EP 1 183 509 B1**
(45) Veröffentlichungstag und Bekanntmachung des Hinweises auf die Patenterteilung: **24.10.2007**
(21) Anmeldenummer: 00909266.9
(22) Anmeldetag: 29.02.2000
(51) Int. Cl.: G01L 1/12

(54) **SENSOR, INSBESONDERE MAGNETOSTRIKTIVER ODER MAGNETOELASTISCHER SENSOR**
SENSOR, IN PARTICULAR, A MAGNETOSTRICTIVE OR MAGNETOELASTIC SENSOR
DETECTEUR, NOTAMMENT DETECTEUR MAGNETOSTRICTIF OU MAGNETOELASTIQUE

(30) Priorität: 26.05.1999 DE 19924002
(43) Veröffentlichungstag der Anmeldung: 06.03.2002
(73) Patentinhaber: Wittenstein AG, 97999 Igersheim (DE)
(72) Erfinder: SPOHR, Hans-Hermann, D-75395 Calw (DE)
(74) Vertreter: Weiss, Peter
(86) Internationale Anmeldenummer: PCT/EP2000/001678
(87) Internationale Veröffentlichungsnummer: WO 2000/073756

(56) Entgegenhaltungen:
- EP-A- 0 292 718
- EP-A- 0 433 930
- WO-A-99/34182
- US-A- 4 802 368
- US-A- 5 437 197
- PATENT ABSTRACTS OF JAPAN vol. 1997, no. 10, 31. Oktober 1997 (1997-10-31) & JP 09 152372 A (TDK CORP), 10. Juni 1997 (1997-06-10) -& US 5 982 054 A

## Beschreibung

Die vorliegende Erfindung betrifft einen Sensor, insbesondere magnetostriktiven oder magentoelastischen Sensor mit zumindest einem aus einem ferromagnetischen Material bestehenden Kernelement, welches zumindest teilweise von zumindest einer Spule umgeben ist.

Derartige Sensoren sind in vielfälltigster Form und Ausführung auf dem Markt bekannt und erhältlich. Sie dienen in erster Linie zur Messung von Kräften, von Kraftänderungen sowie von Drehmomenten und zur Ermittlung deren Änderungen.

Häufig werden Sie als Sensoren zur Messung von Drehmomenten in Wellen oder als Kraftaufnehmer verwendet.

Bspw. ist in der DE 38 19 083 A1 eine magnetoelastische Kraftmessvorrichtung beschrieben, wobei ein Druckringkörper eine Ringspule trägt. Dabei ist in dem Druckringkörper koaxial ein ebenfalls magnetostriktiver Zughülsenkörper mit einer entsprechenden Ringspule angeordnet, so dass bei Krafteinleitung der eine Körper auf Druck und der andere Körper auf Zug beansprucht wird. Nachteilig hierbei ist, dass durch die entsprechende koaxiale Ausbildung der Sensor schwer einzusetzen und zu betreiben ist. Insbesondere kann dieser nicht sehr klein ausgebildet werden und daher nicht universell eingesetzt werden.

Zudem ist er kompliziert im Aufbau und teuer in der Herstellung.

Aus der DE 196 05 096 ist ein Drehmomentsensor und ein Spannungserfassungselement bekannt, bei welchem auf einer Drehwelle, insbesondere überbrückend über einen Freistich ein Kernbauteil mit einer magnetostriktiven Wicklung vorgesehen ist.

Nachteilig daran ist, dass nur für spezielle Wellen ein derartiger Drehmomentsensor vorgesehen sein kann und speziell auf jedes Bauteil angepasst werden muss.

Nach der JP 09 152 372 ist ein magnetostrikitver Sensor beschrieben, welcher aus drei Kernelementen gebildet ist, die jeweils mit einer Spule umgeben sind. Die drei Kernelemente sind dreieckartig nebeneinander angeordnet und stirnseitig jeweils mit einem Deckelelement und einem Bodenelement verbunden. Deckelelement und Bodenelement sind über ein Befestigungselement miteinander verbunden.

Die US 5,437,197 schreibt einen magnetostriktiven Kraftsensor, der aus zwei parallel und nebeneinander angeordneten Kernelementen gebildet ist, die jeweils mit einer Spule umgeben sind. Dabei sind stirnseitig die Kernelemente in ein Deckelelement und ein Bodenelement eingesetzt, welche mittels eines Befestigungselementes zusammengehalten werden.

Der vorliegenden Erfindung liegt die Aufgabe zugrunde, einem Sensor der eingangs genannten Art zu schaffen, welcher die genannten Nachteile beseitigt und mit welchem auf einfache und kostengünstige Weise eine Kraft und/oder ein Drehmoment sowie eine Änderung ermittelt werden kann. Hierbei soll der Sensor und insbesondere dessen Bauteile permanent in beliebigsten Umgebungen eingesetzt werden können.

Ferner sollen Einbaugrösse und Herstellungskosten reduziert werden, wobei gleichzeitig die Lebensdauer erhöht und die Zuverlässigkeit bei grösserer Genauigkeit verbessert werden soll.

Zur Lösung dieser Aufgabe führt, dass zwei Kernelemente hintereinander in Reihe angeordnet in ein Gehäuse eingesetzt sind, wobei externe Zug- und/oder Druckkräfte axial über ein zwischen den beiden Kernelementen angeordnetes Zwischenstück einleitbar sind.

Bei der vorliegenden Erfindung ist von elementarer Bedeutung, dass sämtliche Bauteile des Sensors, wie Kernelemente und Spulelemente in ein Gehäuse eingesetzt werden. Dann können entsprechende zu ermittelnde Kräfte sowie ein magnetischer Rückfluss wegen der Führung des magnetischen Feldes oder Drehmomente an das Gehäuse angreifen. Ein magnetischer Rückfluss kann zusätzlich über das Gehäuse und die Kapselung der Spulenelemente geschehen. Hierdurch sind -der Sensor und insbesondere dessen Bauteile geschützt. Gleichzeitig gewährleistet ein derartiger Sensor einen universellen Einsatz auf den verschiedensten technischen Gebieten.

Bevorzugt wird als Kernelement ein magnetostriktives Material verwendet. Als besonders günstig hat sich das Material Terfenol-D gezeigt. Bei diesem Material ändern sich die magnetischen Eigenschaften bei Einwirkung einer Kraft. Diese Änderung des Magnetfeldes lässt sich mit einem magnetischem Wechselfeld, welches mittels den Spulen um das Kernelement angelegt ist, ermitteln. Hierdurch bekommt die Spule eine bestimmte Impendanz, die den Strom, welcher durch die Spule fliesst, bestimmt. Wirkt eine bestimmte Kraft auf das Kernelement, so ändern sich seine magnetischen Eigenschaften, im wesentlichen seine relative Permeabilität. Diese Änderung beeinflusst das Magnetfeld und somit die Impendanz. Diese Änderungen können als Ströme oder Spannungen gemessen werden.

Um gleichzeitig Druck- und/oder Zugkräfte zu messen, hat sich als besonders vorteilhaft erwiesen, das Kernelement bzw. die Kernelemente vorgespannt in das Gehäuse einzusetzen. Hierdurch lassen sich auf einfache und kostengünstige Weise Druck- und/oder Zugkräfte bestimmen. Deshalb wird hierfür eigenständiger und unabhängiger Schutz begehrt.

Ferner hat sich als besonders vorteilhaft erwiesen, zwei in Reihe angeordnete Kernelemente mit einem zwischengeschalteten Zwischenstück in ein Gehäuse einzusetzen, wobei die beiden Kernelemente jeweils von wenigstens einer Spule umgeben sind. Dabei ist das Gehäuse nach aussen dicht abgeschlossen.

An das Zwischenstück ragen durch das Gehäuse von aussen nach innen Kraftübertragungselemente ein und können auf diese Weise die Kernelemente mit Druck- und/oder Zugkräften beaufschlagen.

Wird eines der beiden Kernelemente mit Druck beaufschlagt, so wird obligatorisch das gegenüberliegende andere Kernelement mit Zug beaufschlagt.

Hierdurch lassen sich unterschiedliche Spannungen in den einzelnen Spulen erzeugen, die exakte Rückschlüsse auf die einwirkende Kräfte oder Drehmomente zulassen.

Vom vorliegenden Erfindungsgedanken sei ferner umfasst, dass dem Sensor wenigstens ein Temperatursensor zugeordnet ist, damit Einfluss auf einen Korrekturfaktor im Betrieb genommen werden kann, wenn sich bspw. die Umgebung eines Sensors temperaturabhängig verhält bzw. eine Temperaturänderung bspw. im Getriebe erfolgt. Somit kann über eine Temperatur eine Messgrösse vorgegeben werden, um die Genauigkeit des Sensorelementes zu erhöhen.

Ferner ist in einem weiteren Ausführungsbeispiel der vorliegenden Erfindung daran gedacht ein einzelnes Kernelement wenigstens mit einer Spule zu versehen, wobei Deckelelemente stirnseitig an dem Kernelement anliegen. Über einen entsprechenden Zylinder wird ein Gehäuse gebildet. Der Zylinder ist vorzugsweise dünnwandig ausgebildet. Entsprechende Druckkräfte können direkt auf das eingekapselte Kernelement mit Spule einwirken, wobei eine Spannungsänderung und damit auch eine Ermittlung der Kraft bzw. Kraftänderung möglich ist. Dabei kann auch daran gedacht sein, das Kernelement vorgespannt zwischen die Deckelelemente einzusetzen, so dass auch Zugkräfte hier angreifen können.

Insgesamt ist mit der vorliegenden Erfindung ein Sensor geschaffen, welcher in sehr geringen Einbaugrössen hergestellt werden kann und mit welchem exakte Messergebnisse erzielt werden können. Dabei kann der Sensor universell in beliebige Maschinenelemente eingesetzt und eingebaut werden, ohne dass er speziell für jeden Einbau spezifiziert und modifiziert werden muss.

Weitere Vorteile, Merkmale und Einzelheiten der Erfindung ergeben sich aus der nachfolgenden Beschreibung bevorzugter Ausführungsbeispiele sowie anhand der Zeichnungen, diese zeigen in
Figur 1 einen schematisch dargestellten Längsquerschnitt durch einen erfindungsgemässen Sensor zum Ermitteln von Zug- und/oder Druckkräften;
Figur 2 einen schematisch dargestellten Längsquerschnitt durch ein weiteres Ausführungsbeispiel eines erfindungsgemässen Sensors;
Figur 3 eine mögliche Anordnung einzelner Sensoren gemäss Figur 2 zur Ermittlung von Kräften und/oder Drehmomenten;
Figur 4 einen schematisch dargestellten Längsquerschnitt durch ein weiteres Ausfürungsbeispiel des Sensors gemäss Figur 2.

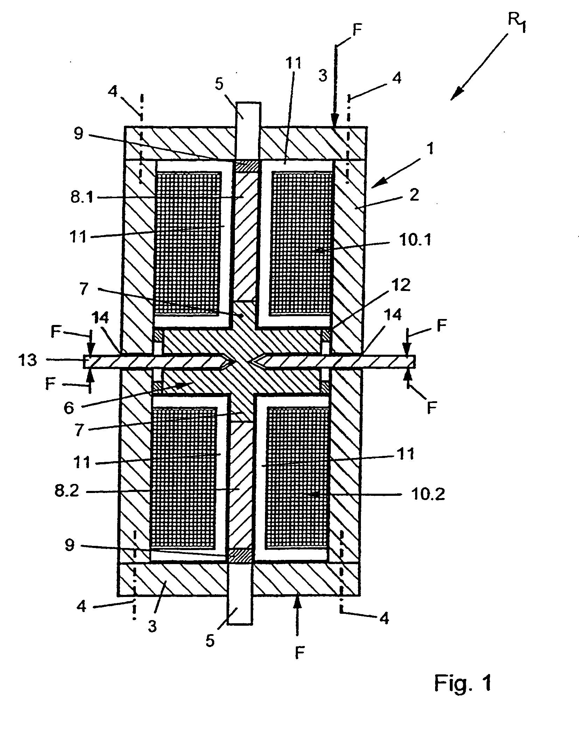

Gemäss Figur 1 weist ein erfindungsgemässer Sensor R₁ ein Gehäuse 1 auf, welches im bevorzugten Ausführungsbeispiel aus einem Zylinder 2 besteht, welcher stirnseitig von Deckelelementen 3 veschliessbar ist. Gestrichelt dargestellte Befestigungselemente 4 können das Deckelelement 3 mit dem Zylinder 2 fest oder wiederlösbar miteinander verbinden.

Hier nicht näher dargestellte Dichtungselemente od. dgl. können vorgesehen sein, um das Gehäuse 1 völlig dicht zu verschliessen.

Dabei soll auch im Rahmen der Erfindung an eine Schweissverbindung oder eine geschraubte Verbindung zwischen Deckelelement 3 und Zylinder 2 gedacht sein. Hier sei der Erfindung keine Grenze gesetzt.

Vorzugsweise mittig ist jedem oder nur einem der beiden Deckelelemente 3 ein Gewindestift 5 zugeordnet, welcher ggf. über eine hier nicht dargestellte Sicherungsmutter in jeder beliebigen Lage festlegbar ist.

Im Gehäuse 1 ist ein Zwischenstück 6 unter Druckbeaufschlagung axial bewegbar eingesetzt. Das Zwischenstück 6 ist mit Aufnahmeabsätzen 7 versehen, die vorzugsweise mittig angeordnet sind. Zwischen den Aufnahmeabsätzen 7 und dem Gewindestift 5 ist jeweils beidseitig im Anschluss an das Zwischenstück 6 ein Kernelement 8.1, 8.2 aus ferromagnetischem Material eingesetzt.

Im bevorzugten Ausführungsbeispiel ist zwischen dem Kernelement 8.1, 8.2 und dem Gewindestift 5 jeweils ein Zylinderstift 9 eingesetzt.

Durch Verdrehen des Gewindestiftes 5 im Deckelelement 3 lässt sich in sehr kleinen Schritten der Gewindestift 5 in das Gehäuse 1 hineindrehen. Hierdurch kann eine Vorspannung auf den Zylinderstift 9 und insbesondere auf die Kernelemente 8.1, 8.2 erzeugt werden.

Die Kernelemente 8.1, 8.2 sind jeweils von Spulen 10.1, 10.2 umgeben. Bevorzugt sind die Spulen 10.1, 10.2 über Spulenkörper 11 zu dem Zwischenstück 6 und den Kernelementen 8.1, 8.2 selbst geringfügig beabstandet, so dass eine geringfügige, infinitesimale Bewegung der Kernelemente 8.1, 8.2 sowie des Zwischenstückes 6 axial möglich ist.

Bevorzugt ist das Zwischenstück 6 innerhalb einer Hülse 12 geführt.

Gleichzeitig bildet die Hülse 12 jeweils einen stirnseitigen Anschlag für die beiden Spulen 10.1, 10.2 bzw. Spulenkörper 11, so dass diese zueinander im Gehäuse 1 beabstandet jeweils stirnseitig an den Deckelelementen 3 anliegen und dort abgestützt sind.

In das Zwischenstück 6 greifen Kraftübertragungselemente 13 durch eine Öffnung 14 im Gehäuse 1 ein, so dass diese von aussen, insbesondere ausserhalb vom Gehäuse 1 mit einer Kraft F, als Zug- und/oder als Druckkraft ausgebildet, beaufschlagt werden können. Hierdurch lässt sich insbesondere eine bestimmte Kraft F, als Druck- und/oder als Zugkraft auf den Sensor R₁ anlegen und durch Vergleich der Spulenspannungen ermitteln.

Stirnseitig im Bereich der Deckelelemente 3 können entsprechende hier nicht aufgezeigte Gegenlager die Kraft F aufnehmen. So kann bspw. eine Kraft F mittels einer Hülse od. dgl. Element in den Sensor eingeleitet werden.

An beiden Spulen 10.1. 10.2 liegt eine Spannung an, die bei Veränderung des Kernelementes 8.1, 8.2 durch Druck- und/der Zugbeaufschlagung eine Änderung durch Änderung des Magnetfeldes erfährt. Diese messbare Änderung kann dann entsprechend in eine resultierende Kraft oder Drehmoment umgerechnet werden.

Von Vorteil beim vorliegenden Sensor ist auch, dass ein vollständig geschlossenes Gehäuse 1 vorliegt, durch welches keine Verschmutzungen od. dgl. eintreten können.

Ferner ist von Vorteil, dass ein derartiger Sensor R₁ an jeder beliebigen Stelle bspw. eines Getriebes od. dgl. elektromechanischen oder elektromagnetischen Antriebes, insbesondere auch auf dem Gebiet der Handhabungstechnik und Robotik permanent eingesetzt werden kann.

Das Gehäuse 1 bietet mechanischen und thermischen Schutz durch die entsprechende Kapselung vor Verunreinigungen, Öl od. dgl..

Insbesondere ist auch von Bedeutung, dass die Kernelemente 8.1, 8.2 vorgespannt in dem Sensorgehäuse 1 angeordnet sind, damit bspw. beim Anlegen einer Druckkraft auf das Kraftübertragungselement 13 einerseits in dem einen Kernelement 8.2 und insbesondere in der entsprechenden Spule 10.2 eine Spannungsänderung erzeugt werden kann, wobei gleichzeitig durch das Nachlassen der Vorspannung im anderen Kraftelement 8.1 eine Änderung der Spannung an der Spule 10.1 ermittelbar ist.

Ferner ist daran gedacht, eine der beiden Spulen 10.1 oder 10.2 als Erregerspule und die andere als Messspule zu betreiben. Durch Überlagerung der entsprechenden Spulenspannungen ist eine Spannungsdifferenz ermittelbar. Diese gibt unmittelbar Aufschluss über die anliegende oder sich ändernde Kraft oder das entsprechende Drehmoment.

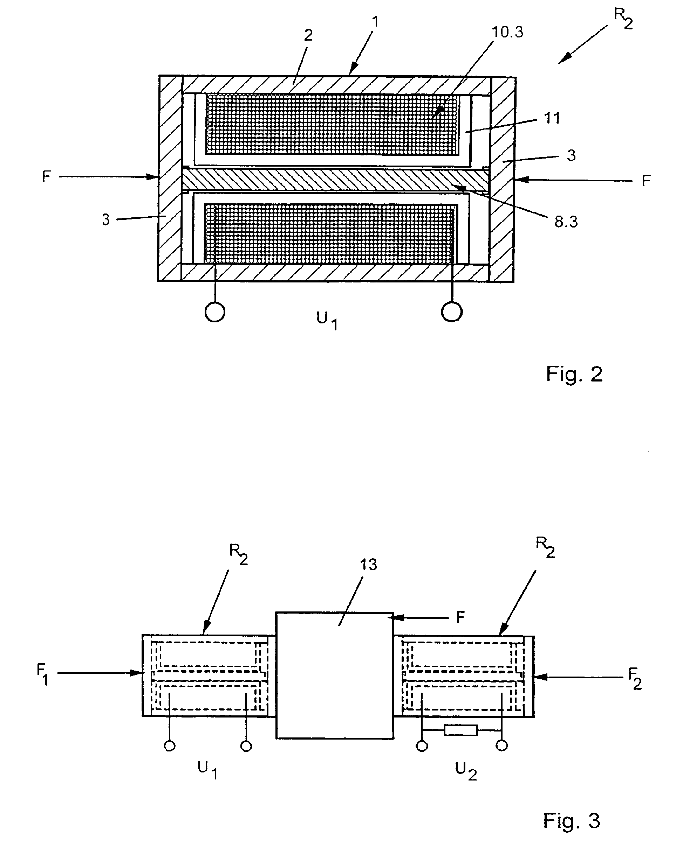

In dem Ausführungsbeispiel der vorliegenden Erfindung gemäss Figur 2 ist ein Sensor R₂ aufgezeigt, welcher ein Kernelement 8.3 aufweist, welches von einer Spule 10.3 mit Spulenkörper 11 umgeben ist. Dabei ist das Kernelement 8.3 stirnseitig an dem Deckelelementen 3 abgestützt.

Ggf. ist das Kernelement 8.3 radial am Deckelelement 3 gehaltert oder in einer entsprechenden Ausnehmung eingesetzt.

Hier nicht näher bezifferte elektrische Leitungen verbinden die Spule 10.3 mit einer Spannungsquelle U₁.

Dabei sind Kernelement 8.3 sowie Spule 10.3 in einem Zylinder 2 angeordnet, welcher in oben beschriebener Weise mit dem Deckelelement 3 verbunden sein kann.

Es hat sich als vorteilig erwiesen, den Zylinder 2 besonders dünn und aus einem sehr weichen ggf. elastischen Material auszugestalten, so dass Druckkräfte F von aussen auf das Deckelelement sich ohne Materialeinfluss des Zylinders 2 auf das Kernelement 8.3 übertragen lassen. Daher können die Zylinder 2 sehr klein ausgebildet sein, so dass lediglich ein Gehäuse 1 gebildet ist, welches kapselartig das Kernelement 8.3 mit den Deckelelementen 3 umfängt.

Dabei ist daran gedacht, dass die elektrischen Verbindungen durch das Gehäuse 1 entweder durch den Zylinder 2 oder das Deckelelement 3 geführt sind und eine entsprechende Kontaktstelle abgedichtet vorliegt.

Ein derartiger eingekapselter Sensor R₂ hat den wesentlichen Vorteil, dass er überall an beliebigen Stellen bspw. in Getriebe eingesetzt werden kann, ohne dass ein separates Gehäuse, Abdichtung, Abschottung od. dgl. vorgesehen sein muss.

Ferner ist auch daran gedacht, das Kernelement 8.3 des Sensors R₂ vorgespannt zwischen die Deckelemente 3 einzusetzen. Dann können auch entsprechende Zugkräfte an den Sensor R₂ angreifen und entsprechend über die Spannungsänderung gemessen bzw. ermittelt werden. Dies liegt ebenfalls im Rahmen der vorliegenden Erfindung.

In dem Ausführungsbeispiel der vorliegenden Erfindung gemäss Figur 3 sind zwei Sensorelemente R₂ mit einem beliebigen externen Kraftübertragungselement 13 verbunden, an welches bspw. eine Kraft F angreift. Andernends können stirnseitig Vorspannkräfte F₁ und F₂ anliegen.

Die beiden Spannungen U1 und U2, die an den beiden Sensoren R₂ anliegen, werden verändert, wenn auf das Kraftübertragungselement 13 eine Kraft F einwirkt. Durch diese Spannungsänderung lässt sich ebenfalls ein Drehmoment und/oder eine Kraft und/oder eine Kraft- und Drehmomentänderung ermitteln. Diese Anordnung soll ebenfalls vom vorliegenden Erfindungsgedanken umfasst sein.

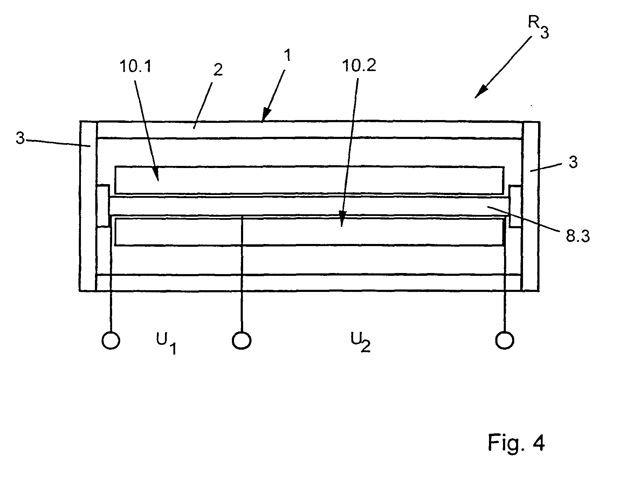

In dem Aushührungsbeispiel der vorliegenden Erfindung gemäss Figur 4 ist ein Sensor R₃ aufgezeigt, der im wesentlichen im Aufbau des Sensors gemäss Figur 2 entspricht. Jedoch sind hier zwei Spulen 10.1, 10.2 auf das Kernelement 8.3 aufgesetzt, deren Spannungen U1, U2 bei entsprechender Kraft- und/oder Drehmomenteinwirkung gemessen werden können. Dabei kann eine der beiden Spannungen eine Erregerspannung und die andere die Messspannung sein.

**Positionszahlenliste**

| | | | | | |
|---|---|---|---|---|---|
| 1 | Gehäuse | 34 | | 67 | |
| 2 | Zylinder | 35 | | 68 | |
| 3 | Deckelelement | 36 | | 69 | |
| 4 | Befestigungselement | 37 | | 70 | |
| 5 | Gewindestift | 38 | | 71 | |
| 6 | Zwischenstück | 39 | | 72 | |
| 7 | Aufnahmeabsatz | 40 | | 73 | |
| 8 | Kernelement | 41 | | 74 | |
| 9 | Zylinderstift | 42 | | 75 | |
| 10 | Spulen | 43 | | 76 | |
| 11 | Spulenkörper | 44 | | 77 | |
| 12 | Hülse | 45 | | 78 | |
| 13 | Kraftübertragungs element | 46 | | 79 | |
| 14 | Öffnung | 47 | | | |
| 15 | | 48 | | | |
| 16 | | 49 | | R₁ | Sensor |
| 17 | | 50 | | R₂ | Sensor |
| 18 | | 51 | | R₃ | Sensor |
| 19 | | 52 | | | |
| 20 | | 53 | | F | Kraft |
| 21 | | 54 | | F1 | Kraft |
| 22 | | 55 | | F2 | Kraft |
| 23 | | 56 | | | |
| 24 | | 57 | | U1 | Spannungsquelle |
| 25 | | 58 | | U2 | Spannungsquelle |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Sensor, insbesondere magnetostriktiver oder magentoelastischer Sensor mit zumindest einem aus einem feromagnetischen Material bestehenden Kernelement (8.1, 8.2), welches zumindest teilweise von zumindest einer Spule (10.1, 10.2) umgeben ist,
**dadurch gekennzeichnet,**
**dass** zwei Kernelemente (8.1, 8.2) hintereinander in Reihe angeordnet in ein Gehäuse (1) eingesetzt sind, wobei externe Zug- und/oder Druckkräfte axial über ein zwischen den beiden Kernelementen (8.1, 8.2) angeordnetes Zwischenstück (6) einleitbar sind.

2. Sensor nach Anspruch 1, **dadurch gekennzeichnet, dass** zumindest eines der beiden Kernelemente (8.1, 8.2) unter einer wählbaren Vorspannkraft axial vorgespannt, zur Bestimmung von axialen Zug- und/oder Druckkräften, in ein Gehäuse (1) vollständig eingekapselt eingesetzt ist.

3. Sensor nach Anspruch 1 oder 2, **dadurch gekennzeichnet, dass** zumindest eines der beiden Kernelemente (8.1, 8.2) axial in den Zylinder (2) eingesetzt ist und stirnseitig direkt oder indirekt mit dem Deckelelement (3) in Verbindung steht.

4. Sensor nach wenigstens einem der Anspruch 1 bis 3, **dadurch gekennzeichnet, dass** zumindest eines der beiden Kernelemente (8.1, 8.2) direkt oder indirekt mittels dem Deckelelement (3) stirnseitig vorgespannt in das Gehäuse (1) eingesetzt ist.

5. Sensor nach wenigstens einem der Ansprüche 1 bis 4, **dadurch gekennzeichnet, dass** das zumindest eines der beiden Kernelemente (8.1, 8.2) zum Deckelelement (3) stirnseitig über einen Zylinderstift (9) beabstandet ist.

6. Sensor nach Anspruch 5, **dadurch gekennzeichnet, dass** zur Erzeugung einer Vorspannung das Kernelement (8.1, 8.2) stirnseitig durch ein im Deckelelement (3) angeordneter Gewindestift (5) mit Druck beaufschlagbar ist.

7. Sensor nach wenigstens einem der Ansprüche 1 bis 6, **dadurch gekennzeichnet, dass** jedem Kernelement (8.1, 8.2) eine Spule (10.1, 10.2), insbesondere eine Erreger- und/oder Messspule koaxial zugeordnet ist.

8. Sensor nach wenigstens einem der Ansprüche 1 bis 7, **dadurch gekennzeichnet, dass** die Spulen (10.1, 10.2) im Gehäuse (1) fixiert angeordnet sind.

9. Sensor nach wenigstens einem der Ansprüche 1 bis 8, **dadurch gekennzeichnet, dass** zumindest eines der beiden Kernelemente (8.1, 8.2) bei Druckbeaufschlagung im Gehäuse (1) gegenüber dem Spulenelement (10.1, 10.2) infinitesimal frei bewegbar ist.

10. Sensor nach wenigstens einem der Ansprüche 1 bis 9, **dadurch gekennzeichnet, dass** das Gehäuse (1) allseits dicht verschlossen ausgebildet ist und ggf. isolierte externe am Gehäuse (1) angeordnete Kontaktstellen zum Anschliessen der Spulen (10.1, 10.2) aufweist.

11. Sensor nach wenigstens einem der Ansprüche 1 bis 10, **dadurch gekennzeichnet, dass** das Zwischenstück (6) im Gehäuse (1) axial bewegbar angeordnet ist.

12. Sensor nach wenigstens einem der Ansprüche 1 bis 11, **dadurch gekennzeichnet, dass** das Zwischenstück (6) gegenüber den Spulen (10.1, 10.2) axial im Gehäuse (1) bewegbar angeordnet ist.

13. Sensor nach wenigstens einem der Ansprüche 1 bis 12, **dadurch gekennzeichnet, dass** das Zwischenstück (6) einen Aufnahmeabsatz (7) aufweist, an welchem die Kernelemente (8.1, 8.2) stirnseitig gelagert sind.

14. Sensor nach wenigstens einem der Ansprüche 1 bis 13, **dadurch gekennzeichnet, dass** dem Zwischenstück (6) wenigstens ein Kraftübertragungselement (13) zugeordnet ist, welches radial aus dem Gehäuse (1) ragt und axial in einer Öffnung (14) des Gehäuses (1) infinitesimal bewegbar ist.

15. Sensor nach wenigstens einem der Ansprüche 1 bis 14, **dadurch gekennzeichnet, dass** das Zwischenstück (6) innerhalb einer Hülse (12) im Gehäuse (1) axial bewegbar gelagert ist, wobei die Hülse (12) jeweils stirnseitig die auf die beiden Kernelemente (8.1, 8.2) aufgesetzten Spulen (10.1, 10.2) zueinander beabstandet und diese im Gehäuse (1) fixiert.

16. Sensor nach wenigstens einem der Ansprüche 1 bis 15, **dadurch gekennzeichnet, dass** dem Sensor, insbesondere dem Gehäuse (1) zumindest ein Temperatursensor zugeordnet ist.

## Claims

1. Sensor, in particular a magnetostrictive or magnetoelastic sensor having at least one core element (8.1, 8.2) made of a ferromagnetic material, which is at least partially surrounded by at least one coil (10.1, 10,2),
**characterized in**
**that** two core elements (8.1, 8.2) arranged in series are inserted into a housing (1), wherein external tensile and/or compressive forces are introducible axially via an intermediate piece (6), which is disposed between the two core elements (8.1, 8.2).

2. Sensor according to claim 1, **characterized in that** at least one of the two core elements (8.1, 8.2) is inserted, axially preloaded under a selectable initial tension, in a fully encapsulated manner into a housing (1) in order to determine axial tensile and/or compressive forces.

3. Sensor according to claim 1 or 2, **characterized in that** at least one of the two core elements (8.1, 8.2) is inserted axially into the cylinder (2) and is in direct or indirect contact at its end with the cover element (3).

4. Sensor according to at least one of claims 1 to 3, **characterized in that** at least one of the two core elements (8.1, 8.2) is inserted, directly or indirectly preloaded at its end by the cover element (3), into the housing (1).

5. Sensor according to at least one of claims 1 to 4, **characterized in that** the at least one of the two core elements (8.1, 8.2) is spaced apart at its end from the cover element (3) by means of a cylindrical pin (9).

6. Sensor according to claim 5, **characterized in that**, in order to generate an initial tension, the core element (8.1, 8.2) is loadable at its end with pressure by means of a threaded pin (5) disposed in the cover element (3).

7. Sensor according to at least one of claims 1 to 6, **characterized in that** a coil (10.1, 10.2), in particular a field- and/or measuring coil, is coaxially associated with each core element (8.1, 8.2).

8. Sensor according to at least one of claims 1 to 7, **characterized in that** the coils (10.1, 10.2) are disposed in a fixed manner in the housing (1).

9. Sensor according to at least one of claims 1 to 8, **characterized in that** at least one of the two core elements (8.1, 8.2) upon loading with pressure is infinitesimally freely movable in the housing (1) relative to the coil element (10.1, 10.2).

10. Sensor according to at least one of claims 1 to 9, **characterized in that** the housing (1) is of a hermetically sealed design on all sides and optionally has insulated external contact points disposed on the housing (1) for connecting the coils (10.1, 10.2).

11. Sensor according to at least one of claims 1 to 10, **characterized in that** the intermediate piece (6) is disposed so as to be axially movable in the housing (1).

12. Sensor according to at least one of claims 1 to 11, **characterized in that** the intermediate piece (6) is disposed so as to be axially movable in the housing (1) relative to the coils (10.1, 10.2).

13. Sensor according to at least one of claims 1 to 12, **characterized in that** the intermediate piece (6) has a locating shoulder (7), on which the ends of the core elements (8.1, 8.2) are mounted.

14. Sensor according to at least one of claims 1 to 13, **characterized in that** there is associated with the intermediate piece (6) at least one load transmission element (13), which projects radially out of the housing (1) and is infinitesimally movable axially in an opening (14) of the housing (1).

15. Sensor according to at least one of claims 1 to 14, **characterized in that** the intermediate piece (6) is mounted inside a sleeve (12) so as to be axially movable in the housing (1), wherein by means of the sleeve (12) the coils (10.1, 10.2), which are mounted onto the two core elements (8.1, 8.2), are spaced apart from one another in each case at their end and fixed in the housing (1).

16. Sensor according to at least one of claims 1 to 15, **characterized in that** at least one temperature sensor is associated with the sensor, in particular with the housing (1).

## Revendications

1. Détecteur, notamment détecteur magnétostrictif ou magnétoélastique, avec au moins un élément de noyau en un matériau ferromagnétique (8.1, 8.2) qui est entouré au moins partiellement d'au moins une bobine (10.1, 10.2), **caractérisé par le fait que** deux éléments de noyau (8.1, 8.2) sont placés dans un boîtier (1) disposés en rangée l'un derrière l'autre, des forces de traction et/ou de poussée externes pouvant être introduites axialement par l'intermédiaire d'une pièce intermédiaire (6) disposée entre les deux éléments de noyau (8.1, 8.2).

2. Détecteur selon la revendication 1, **caractérisé par le fait qu'**au moins l'un des deux éléments de noyau (8.1, 8.2) est placé entièrement encapsulé dans un boîtier (1) de manière prétendue axialement selon une force de prétension sélectionnable pour déterminer les forces de traction et/ou de poussée axiales.

3. Détecteur selon la revendication 1 ou 2, **caractérisé par le fait qu'**au moins l'un des deux éléments de noyau (8.1, 8.2) est placé axialement dans le cylindre (2) et communique, du côté frontal, directement ou indirectement, avec l'élément de couvercle (3).

4. Détecteur selon au moins l'une des revendications 1 à 3, **caractérisé par le fait qu'**au moins l'un des deux éléments de noyau (8.1, 8.2) est placé de manière prétendue du côté frontal, directement ou indirectement au moyen de l'élément de couvercle (3), dans le boîtier (1).

5. Détecteur selon au moins l'une des revendications 1 à 4, **caractérisé par le fait qu'**au moins l'un des deux éléments de noyau (8.1, 8.2) est distant du côté frontal de l'élément de couvercle (3) par l'intermédiaire d'une goupille cylindrique (9).

6. Détecteur selon la revendication 5, **caractérisé par le fait que**, pour générer une prétension, l'élément de noyau (8.1, 8.2) peut être soumis à de la pression du côté frontal par une goupille filetée (5) disposée dans l'élément de couvercle (3).

7. Détecteur selon au moins l'une des revendications 1 à 6, **caractérisé par le fait qu'**à chaque élément de noyau (8.1, 8.2) est associée coaxialement une bobine (10.1, 10.2), en particulier une bobine d'excitation et/ou de mesure.

8. Détecteur selon au moins l'une des revendications 1 à 7, **caractérisé par le fait que** les bobines (10.1, 10.2) sont disposées fixées dans le boîtier (1).

9. Détecteur selon au moins l'une des revendications 1 à 8, **caractérisé par le fait qu'**au moins l'un des éléments de noyau (8.1, 8.2) peut, lors de la soumission à la pression, se déplacer librement de manière infinitésimale dans le boîtier (1) par rapport à l'élément de bobine (10.1, 10.2).

10. Détecteur selon au moins l'une des revendications 1 à 9, **caractérisé par le fait que** le boîtier (1) est réalisé obturé de manière étanche de tous les côtés et présente éventuellement des points de contact isolés, disposés extérieurement au boîtier (1), pour le raccordement des bobines (10.1, 10.2).

11. Détecteur selon au moins l'une des revendications 1 à 10, **caractérisé par le fait que** la pièce intermédiaire (6) est disposée de manière déplaçable axialement dans le boîtier (1).

12. Détecteur selon au moins l'une des revendications 1 à 11, **caractérisé par le fait que** la pièce intermédiaire (6) est disposée dans le boîtier (1) de manière déplaçable axialement par rapport aux bobines (10.1, 10.2).

13. Détecteur selon au moins l'une des revendications 1 à 12, **caractérisé par le fait que** la pièce intermédiaire (6) présente un talon de réception (7) sur lequel sont montés, du côté frontal, les éléments de noyau (8.1, 8.2).

14. Détecteur selon au moins l'une des revendications 1 à 13, **caractérisé par le fait qu'**à la pièce intermédiaire (6) est associé au moins un élément de transmission de force (3) qui ressort radialement du boîtier (1) et qui peut se déplacer axialement de manière infinitésimale dans une ouverture (14) du boîtier (1).

15. Détecteur selon au moins l'une des revendications 1 à 14, **caractérisé par le fait que** la pièce intermédiaire (6) est montée de manière déplaçable axialement dans un manchon (12} dans le boîtier (1), le manchon (12) écartant l'une de l'autre, du côté frontal, les bobines (10.1, 10.2) placées sur les deux éléments de noyau (8.1, 8.2) et les fixe dans le boîtier (1).

16. Détecteur selon au moins l'une des revendications 1 à 15, **caractérisé par le fait qu'**au détecteur, en particulier au boîtier (1), est associé au moins un détecteur de température.
